(19) Europäisches Patentamt
European Patent Office
Office européen des brevets

(11) **EP 2 111 557 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(51) Int Cl.:
*G01P 21/00* *(2006.01)*  *B60W 40/10* *(2012.01)*
*B60W 40/105* *(2012.01)*

(21) Anmeldenummer: **07856474.7**

(22) Anmeldetag: **08.12.2007**

(86) Internationale Anmeldenummer:
**PCT/EP2007/010697**

(87) Internationale Veröffentlichungsnummer:
**WO 2008/086850 (24.07.2008 Gazette 2008/30)**

(54) **VERFAHREN UND VORRICHTUNG ZUR BESTIMMUNG DER GESCHWINDIGKEIT EINES FAHRZEUGS**

METHOD AND DEVICE FOR DETERMINING THE SPEED OF A VEHICLE

PROCÉDÉ ET DISPOSITIF POUR DÉTERMINER LA VITESSE D'UN VÉHICULE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.01.2007 DE 102007002791**

(43) Veröffentlichungstag der Anmeldung:
**28.10.2009 Patentblatt 2009/44**

(73) Patentinhaber: **WABCO GmbH**
**30453 Hannover (DE)**

(72) Erfinder:
• **KNOSMANN, Michael**
**30455 Hannover (DE)**
• **KÜSSNER, Sascha**
**30173 Hannover (DE)**
• **MUNKO, Tobias**
**30171 Hannover (DE)**
• **VON BEHREN, Ulrich**
**31515 Wunstorf (DE)**
• **WOLF, Thomas**
**Bloomfield Hills, MI 48301 (US)**

(74) Vertreter: **Lauerwald, Jörg**
**Wabco GmbH**
**Am Lindener Hafen 21**
**30453 Hannover (DE)**

(56) Entgegenhaltungen:
EP-A- 0 704 703     DE-A1- 10 221 900
DE-A1- 19 537 791     US-A1- 2004 243 368
US-B1- 6 816 804

**Beschreibung**

Die vorliegende Erfindung betrifft ein Verfahren und eine Vorrichtung zum Bestimmen der Geschwindigkeit eines Fahrzeugs, insbesondere eine Vorrichtung und ein Verfahren zum Vergleichen der realen und der vom Tachographen angezeigten Geschwindigkeit von Kraftfahrzeugen.

Die US6816804B1 zeigt ein Verfahren und ein System zur Ermittlung der Fahrzeuggeschwindigkeit. Die US20040243368A1 betrifft ein System zur Analyse des Fahrzeugs und des Fahrerverhaltens. Die DE19537791A1 betrifft ein Verfahren und eine Vorrichtung zur Ermittlung der Fahrgeschwindigkeit eines Kraftfahrzeuges. Die EP0704703B1 betrifft ein Verfahren zur Ermittlung der Geschwindigkeit eines Rades eines Kraftfahrzeuges um querdynamische Betriebsgrößen des Fahrzeuges, wie z.B. die Gierwinkelgeschwindigkeit oder die Bahnkrümmung, daraus herzuleiten.

Die Geschwindigkeitssignale, welche herkömmlicherweise von Tachographen in Kraftfahrzeugen angegeben werden, basieren auf der Drehgeschwindigkeit der Räder. Ein Nachteil herkömmlicher Tachographen besteht darin, dass die Radgeschwindigkeit keine bleibende, zuverlässige Aussage über die tatsächliche Geschwindigkeit des Fahrzeugs ermöglicht. Abweichungen entstehen insbesondere durch eine Änderung der Reifengröße. Wird ein Tacho z.B. mit kleinen Reifen kalibriert und werden sodann größere Reifen montiert, so liegt die tatsächliche Fahrzeuggeschwindigkeit über der Referenzgeschwindigkeit bei der Kalibrierung. Es ist daher üblich und in verschiedenen Ländern auch vorgeschrieben, die vom Tachographen angezeigten Geschwindigkeitssignale regelmäßig einer Prüfung zu unterziehen. Hierfür werden Vorrichtungen eingesetzt, bei denen aus der Radgeschwindigkeit direkt auf die Fortbewegungsgeschwindigkeit geschlossen werden kann. Dies gelingt z.B. durch externe Rollen, auf denen sich die Räder bewegen, woraus sich dann die tatsächliche Geschwindigkeit des Fahrzeugs ableiten lässt. Mit den bekannten Lösungen können also Abgleiche der Einzelradgeschwindigkeiten zueinander oder zu einer externen Geschwindigkeit vorgenommen werden. Zwar ist eine regelmäßige Kalibrierung der Tachographensignale in weiten Teilen Europas vorgeschrieben, diese kann aber durch nachträgliche Änderungen an den Reifen leicht umgangen bzw. erneut abgefälscht werden.

Es ist daher wünschenswert, eine Lösung bereitzustellen, welche die Bestimmung der Geschwindigkeit unabhängig von der Reifengröße ermöglicht.

Die Aufgabe wird gemäß einem Aspekt der vorliegenden Erfindung von einer Vorrichtung gelöst, welche Mittel zum Bestimmen der Gierrate eines Fahrzeuges, Mittel zur Bestimmung einer Kurvenkrümmung einer von dem Fahrzeug durchfahrenen Kurve sowie Mittel zum Bestimmen der Fahrzeuggeschwindigkeit aus einem Quotienten der Gierrate und der Kurvenkrümmung aufweist. Der Erfindung liegt demnach die Erkenntnis zu Grunde, dass sich die Fahrzeuggeschwindigkeit eines Fahrzeuges aus der Gierrate und der Kurvenkrümmung einer Kurve, welche vom Fahrzeug durchlaufen wird, bestimmen lässt. Die so ermittelte Fahrzeuggeschwindigkeit ist zwar davon abhängig, dass das Fahrzeug eine Kurve durchläuft, allerdings tritt ein solches Ereignis fortwährend ein. Daraus ergibt sich, dass die Fahrzeuggeschwindigkeit nahezu fortwährend unter Berücksichtigung der jeweiligen Eigenschaften des Fahrzeuges, wie der Radgröße etc., abgeglichen bzw. ermittelt werden kann. Damit werden die Nachteile bekannter Kalibrierungsmethoden, welche nur zeitweise erfolgen und somit nur für den Augenblick der Messung zutreffen, durch die vorliegenden Erfindung vorteilhaft überwunden.

Gemäß einer vorteilhaften Ausgestaltung wird die Kurvenkrümmung der Kurve, welche vom Fahrzeug basierend auf der Differenzgeschwindigkeit zweier senkrecht zur Fahrtrichtung beabstandeter Räder des Fahrzeuges durchlaufen wird, ermittelt. Dabei wird vorteilhaft ausgenutzt, dass zwei Räder, welche senkrecht zur Fahrtrichtung einen Abstand aufweisen, beim Durchlaufen einer Kurve entlang zweier Kurven laufen, deren Radien unterschiedlich groß sind. Mithin sind auch die von den Rädern durchlaufenen Wege unterschiedlich groß. Daraus ergibt sich wiederum, dass die Geschwindigkeit - also die Drehgeschwindigkeit der Räder - unterschiedlich sein muss. Die Erfindung nutzt diesen Zusammenhang vorteilhaft aus, um aus der Differenzgeschwindigkeit der Räder auf die Krümmung der Kurve zurückzuschließen. Bei diesem Differenzverfahren entfallen die Fehler, welche durch die absoluten Radgrößen (Durchmesser) entstehen. Insbesondere sind senkrecht zur Fahrtrichtung beabstandete Räder, wie z.B. die beiden Vorderräder oder die beiden Hinterräder eines Fahrzeuges, in der Regel gleich groß und auch gleich stark benutzt. All dies wird innerhalb der erfindungsgemäßen Vorrichtung vorteilhaft ausgenutzt. Vorteilhaft weisen die Räder darüber hinaus einen gewissen Mindestabstand auf, um so die Messung zu ermöglichen. Es liegt auf der Hand, dass die Messergebnisse einer Differenzmessung zweier Räder, welche sehr dicht zueinander stehen, fehleranfälliger sind als eine Messung an zwei Rädern, die sich an gegenüberliegenden Seiten des Fahrzeuges befinden. Sensoren zur Bestimmung der Radgeschwindigkeit sind allgemein erhältlich. Die Kurvenkrümmung wird vorteilhaft aus der Differenzgeschwindigkeit zwischen den Vorderrädern (oder auch anderen Rädern am Fahrzeug, die sich paarweise gegenüberstehen), der Spurweite der entsprechenden Achse (z.B. der Vorderachse bei den Vorderrädern) und dem Mittelwert der Vorderradgeschwindigkeit ermittelt. Aus dem Quotienten aus der Gierrate geteilt durch die Kurvenkrümmung lässt sich die dann Fahrzeuggeschwindigkeit ermitteln.

Gemäß einem weiteren vorteilhaften Aspekt der Erfindung ist die Vorrichtung ausgestaltet, um die aus der Gierrate und der Kurvenkrümmung ermittelte Fahrzeuggeschwindigkeit mit dem auf einem Tachographen angezeigten Geschwindigkeitssignal zu vergleichen. In vorteilhafter Weise kann sodann das angezeigte Geschwindigkeitssignal des Tachographen über die aus der Kurvenkrümmung und der Gierrate ermittelte Fahrzeuggeschwindigkeit überprüft werden. Im Unterschied zu herkömmlichen Prüfverfahren für die angezeigte Tachogeschwindigkeit kann die Überprüfung gemäß der vorliegenden Erfindung fortwährend bei laufendem Betrieb des Fahrzeuges stattfinden, soweit das Fahrzeug mit einer erfindungsgemäßen Vorrichtung ausgestattet ist.

Gemäß einem weiteren vorteilhaften Aspekt der Erfindung ist die Vorrichtung ausgestaltet, um die Fahrzeuggeschwindigkeit zu ermitteln, solange das Fahrzeug nur eine geringe Dynamik bzw. eine beschränkte Dynamik aufweist. Gemäß einem vorteilhaften Aspekt der Erfindung wird der Abgleich nur solange vorgenommen, wie die gemessene Gierrate mindestens 15°/s beträgt. Hierdurch wird gewährleistet, dass keine Fehlereinflüsse aufgrund einer zu kleinen Fahrzeugdynamik auftreten.

Gemäß einem weiteren vorteilhaften Aspekt der Erfindung ist die Vorrichtung ausgestaltet, um die Fahrzeuggeschwindigkeit nur dann zu bestimmen, wenn der Lenkwinkel am Rad weniger als 20° beträgt. Dies berücksichtigt ungünstige Effekte aufgrund einer zu engen Kurvenfahrt. Die Vorrichtung kann weiterhin vorteilhaft ausgestaltet sein nur dann eine Messung vorzunehmen, wenn die Fahrzeugreferenzgeschwindigkeit mindestens 10 km/h betragen. Auch hierdurch werden ungünstige Messbedingungen und dadurch bedingte Fehlereinflüsse vermieden.

Gemäß einem weiteren vorteilhaften Aspekt der Erfindung ist die Vorrichtung ausgestaltet, um die Fahrzeuggeschwindigkeit nur dann zu bestimmen, wenn die Bremse nicht betätigt wird. Gemäß einem weiteren vorteilhaften Aspekt der vorliegenden Erfindung wird auch der Gradient der Gierrate begrenzt. So kann z.B. die Messung nur dann durchgeführt werden, wenn die maximale Änderung gegenüber dem Startwert +/- 1 °/s nicht übersteigt.

Gemäß einem weiteren vorteilhaften Aspekt der Erfindung ist die Vorrichtung ausgestaltet, um bei der Messung die Querbeschleunigung mit zu berücksichtigen. So ist ein weiterer Sensor vorgesehen, welcher die Querbeschleunigung bestimmt, sodass die Bestimmung der Fahrzeuggeschwindigkeit aus der Gierrate und der Kurvenkrümmung nur erfolgt, wenn die Querbeschleunigung maximal 3 m/s$^2$ nicht übersteigt. Besonders bevorzugt ist es, dass die Vorrichtung ausgestattet ist mit einem Sensor zur Sensierung der Gierrate und/oder einem Sensor zur Bestimmung der Querbeschleunigung des Fahrzeugs und/oder einem Sensor zur Bestimmung der Raddrehzahl eines linken Rades v_li und einem Sensor zur Bestimmung der Geschwindigkeit eines rechten Rades v_re.

Gemäß einem weiteren vorteilhaften Aspekt der Erfindung ist die Vorrichtung ausgestaltet, die Kurvenkrümmung unter Berücksichtigung der querbeschleunigungsabhängigen Radlaständerung zu berechnen, bzw. die Kurvenkrümmung um einen spezifischen Faktor zu korrigieren, welcher auf der querbeschleunigungsabhängigen Radlaständerung basiert. Dabei wird berücksichtigt, dass sich das Fahrzeug bei einer Kurvenfahrt zur Seite neigt, sodass die Außenräder in der Regel stärker zusammengedrückt werden als die Innenräder. Diese Verformung kann im Rahmen des Berechnungsverfahrens mit in die Bestimmung der Fahrzeuggeschwindigkeit aus Gierrate und Kurvenkrümmung einfließen.

Vorteilhaft kann die Vorrichtung ausgestaltet sein, um die Bestimmung der Fahrzeuggeschwindigkeit auszuführen, wenn mindestens eine auf der Gierrate, der Änderung der Gierrate, dem Lenkwinkel am Rad, der Fahrzeugreferenzgeschwindigkeit, der Betätigung der Bremsen, der Querbeschleunigung der Fahrzeuges, dem Kurvenradius der durchfahrenen Kurve, und den Regelfunktionen, insbesondere ESC, ABS oder ASR basierende Bedingung mindestens für einen vorgegebenen Zeitraum erfüllt ist. Dies kann beispielsweise ein Zeitraum sein, welcher durch eine in einer Verarbeitungseinheit auftretende Dauer eines Programmdurchlaufes definiert wird. Für eine spezifische Konfiguration kann sich z.B. eine vorteilhafte Lerndauer von etwa 130 Programmdurchläufen ergeben, die dann beispielsweise mindestens 400 ms beträgt. Dieser Zeitraum ist lang genug, um ein erfolgreiches Lernen zu erzielen, und dennoch so kurz, dass er wiederholt während einer Fahrt auftreten kann. Einschränkungen für einen wirksamen Messbereich, welche in der erfindungsgemäßen Vorrichtung vorgesehen sind, können sich auch durch die Festlegung einer maximalen Geschwindigkeit (z.B. maximal 40 km/h) oder die Festlegung eines maximalen Kurvenradius (z.B. 50 m) ergeben. Letzterer entspricht einer Kurvenkrümmung von 0,02. Gemäß einem weiteren vorteilhaften Aspekt der Erfindung sind Regelfunktionen wie ESC, ABS oder ASR während der Messung nicht aktiv. Die vorgenannten Aspekte der vorliegenden Erfindung beruhen auf der Erkenntnis, dass vorteilhaft unterschiedliche Bedingungen bei der Messung der Fahrzeuggeschwindigkeit zu berücksichtigen sind. Dadurch werden die Fehlereinflüsse auf das Messergebnis vorteilhaft vermindert.

Die Aufgabe wird erfindungsgemäß auch durch ein Verfahren gelöst, bei welchem zunächst die Gierrate bestimmt wird, sodann die Kurvenkrümmung und schließlich die Fahrzeuggeschwindigkeit aus der Gierrate und der Kurvenkrümmung ermittelt wird. Bei der erfindungsgemäßen Lösung wird die Gierrate über einen hierfür vorgesehenen Sensor ermittelt. Das erfindungsgemäße Verfahren berücksichtigt vorteilhaft die vorgenannten Ausgestaltungen der erfindungsgemäßen Vorrichtung.

Die vorliegenden Erfindung betrifft auch ein Verfahren zum Überprüfen von Tachographen, welches die Schritte des vorgenannten Verfahrens beinhaltet und weiter einen Schritt aufweist, in dem das von einem Tachographen angegebene Geschwindigkeitssignal mit der erfindungsgemäß bestimmten Fahrzeuggeschwindigkeit verglichen wird und das Signal des Tachographen so dann bewertet wird.

Die vorliegende Erfindung betrifft ebenfalls eine Anzeigevorrichtung, wie z.B. ein Display, in einem Fahrzeug. Die Anzeigevorrichtung ist erfindungsgemäß derart modifiziert, dass die Anzeigevorrichtung einen Eingang für ein elektrisches Signal aufweist, welches eine Geschwindigkeitsinformation repräsentiert, die basierend auf den vorstehenden erfindungsgemäßen Aspekten im Hinblick auf die Gierrate des mit der Anzeigevorrichtung versehenen Fahrzeuges und der Kurvenkrümmung einer von dem Fahrzeug durchfahrenen Kurve definiert ist. Entsprechend kann die Vorrichtung Mittel umfassen, welche die Gierrate und die Kurvenkrümmung einer von dem Fahrzeug durchfahrenen Kurve, sowie Mittel zum Bestimmen der Fahrzeuggeschwindigkeit aus dem Quotienten der Gierrate und der Kurvenkrümmung aufweisen. Diese Mittel können elektrisch oder in anderer Weise mit dem Tachographen gekoppelt sein, um so die Geschwindigkeitsanzeige durch den Tachographen mit der berechneten Geschwindigkeit vergleichen zu können.

Die vorliegende Erfindung wird nachfolgend beispielhaft anhand von Ausführungsbeispielen unter Bezugnahme auf die beigefügten Figuren beschrieben. Es zeigen

Fig. 1 ein Diagramm zur Veranschaulichung des Lernbereiches gemäß einem Ausführungsbeispiel der vorliegenden Erfindung,

Fig. 2 eine vereinfachte Darstellung zur Erläuterung des Verhältnisses der Radgeschwindigkeiten bei einer Kurvenfahrt bezüglich vorteilhafter Aspekte der vorliegenden Erfindung, und

Fig. 3 eine vereinfachte Blockdarstellung eines bevorzugten Ausführungsbeispiels der vorliegenden Erfindung.

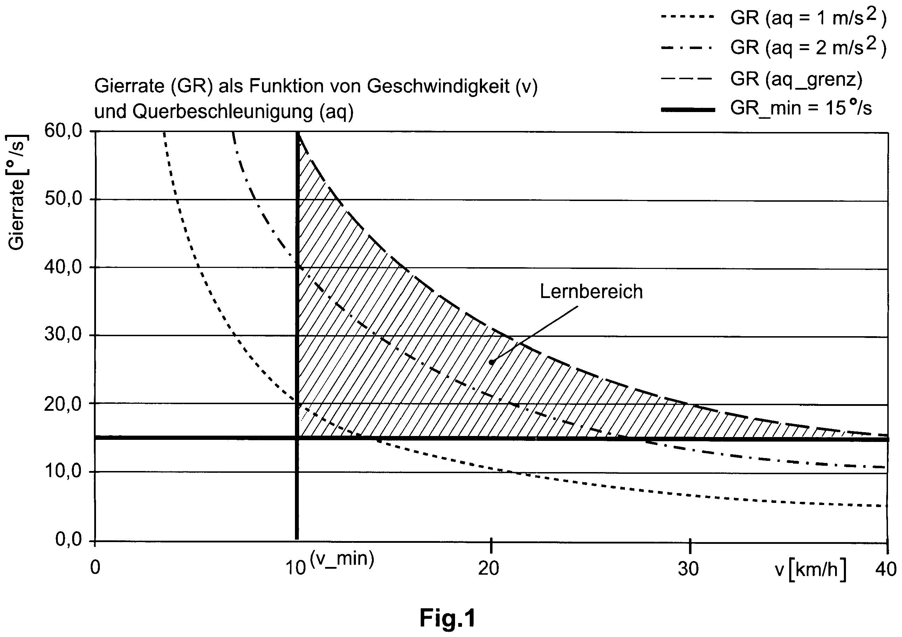

Fig. 1 zeigt ein Diagramm zur Veranschaulichung eines beispielhaften Lernbereiches, in welchem die Beobachtung des Tachosignals der vorliegenden Erfindung durchgeführt werden kann. Die X-Achse entspricht der Geschwindigkeit des Fahrzeuges v, während auf der Y-Achse im Verhältnis zur X-Achse die Gierrate in ° je Sekunde aufgetragen ist. Außerdem sind die Kurven unterschiedlicher Querbeschleunigungen aq dargestellt. Grundsätzlich kann also beispielhaft eine Kalibrierung basierend auf dem Verfahren gemäß der vorliegenden Erfindung durchgeführt werden, wenn die Gierrate größer als mindestens 15° je Sekunde ist. Hierbei handelt es sich natürlich nur um einen beispielhaften Wert. Darüber hinaus kann von einer Kalibrierung abgesehen werden, solange das Fahrzeug langsamer als 10 km/h ist. Je nach Krümmung der Kurve und Fahrgeschwindigkeit ergibt sich ein Maximalwert, welcher durch die maximale Gierratenlinie für aq_grenz, also die maximale Querbeschleunigung, eingetragen ist. Innerhalb des Bereiches, welcher durch die minimale Geschwindigkeit 10 km/h, die minimale Gierrate gr_min = 15°/s und die maximale Querbeschleunigung aq_grenz eingegrenzt wird, kann eine erfolgreiche Überprüfung durchgeführt werden. Die Zusammenhänge werden im Einzelnen nachfolgend beschrieben.

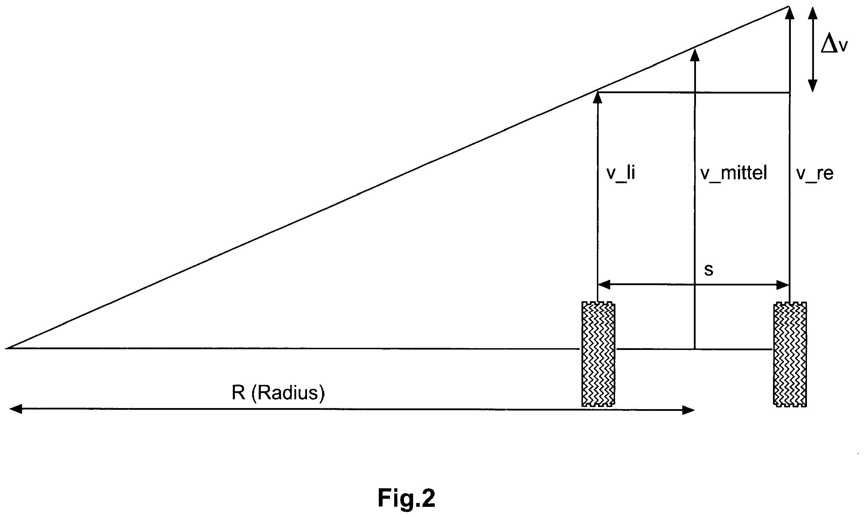

Bei einem bevorzugten Ausführungsbeispiel der vorliegenden Erfindung wird die Fahrzeuggeschwindigkeit mit einer von einem Sensor gemessenen Gierrate und der Kurvenkrümmung, welche den Kehrwert des aktuellen Kurvenradius darstellt, berechnet. Der Kurvenradius wird aus der Differenz der Drehzahlen der Vorderräder bestimmt. Diese Zusammenhänge sind anhand der Fig. 2 veranschaulicht.

Die beiden Reifen R_li und R_re befinden sich beispielsweise an gegenüberliegenden Seiten vorne, in der Mitte oder hinten am Fahrzeug. Aufgrund der Distanz s der beiden Reifen R_li und R_re müssen bei einer Kurvenfahrt mit dem Radius R die beiden Reifen R_li und R_re unterschiedliche Geschwindigkeiten v_li und v_re aufweisen. Die Differenz dieser beiden Geschwindigkeiten beträgt Δv. Genau in der Mitte zwischen den beiden Rädern liegt die Geschwindigkeit v_mittel vor. Bei dem bevorzugten Ausführungsbeispiel der vorliegenden Erfindung sind ein entsprechender Sensor zur Bestimmung der Gierrate und Drehzahlsensoren an den Vorderrädern R_li, R_re vorgesehen. Die Fehlereinflüsse durch Offset und Drift der Sensorsignale, insbesondere des Sensors zur Bestimmung der Gierrate, werden zuvor kalibriert bzw. korrigiert. Die Kurvenkrümmung ist der Kehrwert des aktuellen Kurvenradius. Ihre Berechnung ist aufgrund der Wahl der Eingangsgrößen unabhängig vom absoluten Niveau der Radgeschwindigkeiten und ergibt sich wie folgt:

$$KK_{mess} = \frac{\Delta v}{s \cdot v} \; ,$$

wobei Δv die Differenzgeschwindigkeit zwischen den Vorderrädern, s die Spurweite der Vorderachse und v der Mittelwert der Vorderradgeschwindigkeiten ist. Die Fahrzeuggeschwindigkeit ergibt sich sodann zu

$$v\_Fzg = \frac{GR}{KK} \; ,$$

wobei GR die gemessene Gierrate ist. Die so bestimmte Fahrzeuggeschwindigkeit wird mit dem auf dem Tachometer bzw. Tachographen angegebenen Geschwindigkeitssignal verglichen. Der Mittelwert der Vorderradgeschwindigkeit v entspricht dem Signal auf dem Tachographen, da die Radgeschwindigkeiten auf das Geschwindigkeitssignal des Tachographen abgeglichen sind. Aus dem Vergleich der tatsächlichen Fahrzeuggeschwindigkeit mit diesem Mittelwert wird die relative Abweichung des Tachographensignals von der realen physikalischen Geschwindigkeit berechnet. Solange die Voraussetzungen für eine gültige Messung erfüllt sind, werden die Abweichungen in jedem Programmumlauf aufsummiert. Bei ausreichend langem Vorliegen der Lernbedingungen wird aus dieser Summe ein Mittelwert der relativen Abweichungen bestimmt. Dieser Mittelwert wird mehrfach, z.B. durch eine Mehrzahl von Kurvenfahrten, bestätigt. Die Bestätigungen werden über einen sogenannten Vertrauenswert bewertet, der erhöht wird, wenn der neue Mittelwert innerhalb eines festgelegten Bereiches liegt. Um die Daten über mehrere Kurven auszuwerten, wird aus den mit dem jeweiligen Vertrauen gewichteten Mittelwerten eine Gesamtabweichung berechnet. Wenn der Vertrauenswert in die Gesamtabweichung einen festgelegten Wert erreicht, wird der dann ermittelte, gefilterte Mittelwert der relativen Abweichung zwischen Fahrzeug und Tachogeschwindigkeit bewertet. Bleibt die Gesamtabweichung in einem festgelegten Bereich, wird ein Flag für erfolgreiche Verifizierung des Tachosignals gesetzt. Überschreitet die Abweichung einen Grenzwert, wird ein Hinweis (z.B. ein entsprechendes Bit oder ein Flag) gesetzt. Dies führt zu einer Anzeige bzw. Ausgabe von Informationen bezüglich des fehlerhaften Tachosignals. Dies kann auch mit einer Aufforderung zur Neukalibrierung verbunden sein. Weiter kann dies auch zu einer teilweisen Abschaltung einzelner Regelfunktionen, z.B. ESC, führen, deren fehlerfreie Funktion nicht mehr gewährleistet ist, solange die tatsächliche Fahrzeuggeschwindigkeit zu stark vom Geschwindigkeitssignal des Tachographen abweicht.

Für die Lernbedingungen werden spezifische Verhältnisse bzw. Schranken für die Dynamik des Fahrzeugs aufgestellt. Einige Aspekte dieser erfindungsgemäßen Zusammenhänge wurden bereits anhand Fig. 1 erläutert. Nachfolgend werden weitere Aspekte nochmals detailliert beschrieben. Als Schranken kommt eine Vielzahl von Parametern in Betracht, die entweder einzeln, also jeder Parameter für sich, oder alle gemeinsam erfüllt sein müssen, um eine zulässige Bestimmung der Fahrzeuggeschwindigkeit durchzuführen. Zunächst ist sicherzustellen, dass spezifische Regelfunktionen, wie z.B. ESC, ABS oder ASR, nicht aktiv sind. Darüber hinaus werden die verwendeten Radgeschwindigkeiten geprüft, um lediglich die Restabweichung der Tachographengeschwindigkeit zur realen Fahrzeuggeschwindigkeit zu ermitteln. Entsprechend sind eventuelle Abgleiche untereinander und zum Tacho vorab durchzuführen, sodass diese bei der nachträglichen Bestimmung der Fahrzeuggeschwindigkeit abgeschlossen sind. Gleiches gilt für weitere erforderliche Eingangsgrößen, d.h. deren eventuell erforderliche Lernfunktionen müssen abgeschlossen sein. Dies gilt auch für die Offset- und Driftkorrekturen der Sensorsignale. Um verwertbare Ergebnisse zu erzielen, wird die Wirkung der Funktion z.B. auf Phasen geringer Dynamik beschränkt. Die entsprechenden Randbedingungen können z.B. die gemessene Gierrate betreffen, welche in einer vorteilhaften Ausgestaltung mindestens 15°/s betragen sollte. Die Querbeschleunigung, welche ebenfalls durch einen eigenen Sensor oder Sensoren ermittelt wird, kann beispielsweise auf maximal 3m/s² beschränkt werden. Um extreme Kurvenfahrten von der Messung auszuschließen, kann weiterhin der Lenkwinkel am Rad auf maximal 20° oder ähnliche maximale Grenzwerte festgelegt werden. Die Fahrzeugreferenzgeschwindigkeit kann ebenfalls auf einen minimalen oder maximalen Wert beschränkt werden. So kann beispielsweise eine Mindestgeschwindigkeit von 10 km/h festgelegt werden. Darüber hinaus ist zu gewährleisten, dass die Bremse nicht betätigt wird. Auch eine Änderung der Gierrate kann derart berücksichtigt werden, dass die Änderung einen bestimmten Maximalwert nicht übersteigt. So kann die maximale Änderung vom Startwert auf +/- 1°/s festgelegt sein. Schließlich kann ein Lernintervall zur Bestimmung der Fahrzeuggeschwindigkeit bei einer vorteilhaften Ausgestaltung eine gewisse Mindestlänge aufweisen. Ein günstiger Wert hierfür beträgt vorteilhaft 400 ms. Dieser Wert ergibt sich aus einer Anzahl von 130 Programmdurchläufen bei einer spezifischen Konfiguration mit einer üblichen Verarbeitungseinheit, welche gemäß der vorliegenden Erfindung programmiert ist. Andere Werte sind jedoch denkbar. Aus den vorgenannten Randbedingungen können weitere Einschränkungen ermittelt werden. So ergibt sich z.B. eine maximale mittlere Geschwindigkeit von 40 km/h. Der Kurvenradius kann bei einer vorteilhaften Ausgestaltung auf maximal 50 m beschränkt sein, was einer Kurvenkrümmung $KK_{min}$ von 0,02 entspricht.

Bei einer vorteilhaften Ausgestaltung der vorliegenden Erfindung wird die Kurvenkrümmung um den Einfluss der Querbeschleunigungsabhängigen Radlaständerung bei der Kurvenfahrt korrigiert. Dies kann z.B. durch Hinzunahme eines spezifischen Wertes zur unkorrigierten Kurvenkrümmung erfolgen. Bei derartigen Korrekturen können z.B. die Höhe des Schwerpunktes des Fahrzeuges und die Achslast berücksichtigt werden. Insgesamt wird die Tatsache berücksichtigt, dass sich das Fahrzeug bei einer Kurvenfahrt aufgrund der Zentripetal- bzw. Zentrifugalkräfte zur Seite neigt und die Außenräder stärker zusammengedrückt werden als die Innenräder. Aufgrund dessen verändert sich der Radius der Räder und damit die Drehgeschwindigkeit, was zur genauen Bestimmung der Fahrzeuggeschwindigkeit berücksichtigt werden kann.

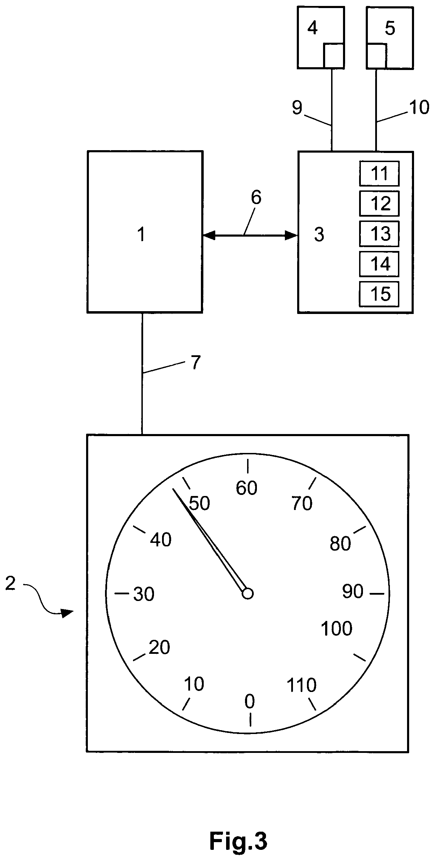

Fig. 3 zeigt eine vereinfachte Darstellung eines Ausführungsbeispiels der vorliegenden Erfindung. In dieser anschaulichen Blockdarstellung ist eine Vorrichtung 1 und ein Tachograph 2 dargestellt. Die Vorrichtung 1 sei in diesem Fall eine herkömmliche Vorrichtung, welche Signale 7 zum Ansteuern des Tachographen ausgibt, so dass der Tachograph basierend auf der Drehgeschwindigkeit der Räder die Fahrzeuggeschwindigkeit herkömmlicherweise angibt. Erfindungsgemäß wird nun eine weitere elektronische Einheit 3 hinzugeschaltet, welche die Ausgangssignale 6 der herkömmlichen Vorrichtung 1 derart verarbeitet, dass ein Vergleich zwischen der Tachogeschwindigkeit und der aus Gierrate und Kurvenkrümmung berechneten Geschwindigkeit möglich ist. Die Vorrichtung 3 gemäß der vorliegenden Erfindung umfasst insbesondere Mittel zum Bestimmen der Gierrate des Fahrzeugs 11, Mittel zur Bestimmung der Kurvenkrümmung 12 einer vom Fahrzeug durchlaufenen Kurve sowie Mittel zum Bestimmen der Fahrzeuggeschwindigkeit 13 aus der Gierrate und der Kurvenkrümmung. Die Vorrichtung ist ausgestaltet, um die Kurvenkrümmung basierend auf der Differenzgeschwindigkeit zweier Räder an den gegenüberliegenden Seiten des Fahrzeuges zu ermitteln. Außerdem verfügt sie über Mittel zum Vergleichen 14 der von einem Tachographen angezeigten Geschwindigkeiten mit der aus der Gierrate und der Kurvenkrümmung ermittelten Fahrzeuggeschwindigkeit sowie über Mittel zum Anzeigen 15 einer erkannten Abweichung zwischen der realen (aus Gierrate und Kurvenkrümmung berechneten) und der vom Tachographen angezeigten Geschwindigkeit. Weiter ist sie mittels Verbindungsleitungen 9, 10 an Sensoren 4, 5 gekoppelt, welche zur Sensierung der Gierrate, der Radgeschwindigkeit und der Querbeschleunigung des Fahrzeugs ausgestaltet sein können. Die Sensoren 4, 5 beinhalten im bevorzugten Ausführungsbeispiel einen Sensor zur Sensierung der

Gierrate, einen Sensor zur Bestimmung der Querbeschleunigung des Fahrzeugs, einen Sensor zur Bestimmung der Raddrehzahl eines linken Rades v_li und einen Sensor zur Bestimmung der Geschwindigkeit eines rechten Rades v_re. Die Signale dieser Sensoren werden dann mittels Verbindungsleitungen 9, 10 an die Vorrichtung 3 weitergeleitet und auf die zuvor beschriebene Weise dort verarbeitet bzw. angezeigt.

## Patentansprüche

1. Vorrichtung zur Bestimmung der Geschwindigkeit eines Fahrzeuges mit Mitteln zum Bestimmen der Gierrate des Fahrzeuges und Mitteln zur Bestimmung der Kurvenkrümmung einer vom Fahrzeug durchlaufenen Kurve, **dadurch gekennzeichnet, dass** die Vorrichtung Mittel zum Bestimmen der Fahrzeuggeschwindigkeit aus der Gierrate und der Kurvenkrümmung aufweist, wobei die Fahrzeuggeschwindigkeit aus dem Quotienten aus der Gierrate geteilt durch die Kurvenkrümmung ermittelt wird, wobei der Quotient und die Kurvenkrümmung auf der Differenzgeschwindigkeit und dem Mittelwert von zwei Rädern an gegenüberliegenden Seiten des Fahrzeugs basiert und wobei die Vorrichtung ein Mittel zum Vergleichen der von einem Tachographen angezeigten und auf der Drehgeschwindigkeit der Räder basierenden Geschwindigkeit mit der aus der Gierrate und der Kurvenkrümmung ermittelten Fahrzeuggeschwindigkeit aufweist.

2. Vorrichtung nach Anspruch 1, **dadurch gekennzeichnet, dass** die Vorrichtung ausgestaltet ist, die Fahrzeuggeschwindigkeit zu bestimmen, wenn die Gierrate mindestens 15°/s beträgt.

3. Vorrichtung nach Anspruch 1 oder 2, **dadurch gekennzeichnet, dass** die Vorrichtung ausgestaltet ist, um die Bestimmung der Fahrzeuggeschwindigkeit auszuführen, wenn der Lenkwinkel am Rad kleiner als 20° ist.

4. Vorrichtung nach einem der vorstehenden Ansprüche, **dadurch gekennzeichnet, dass** die Vorrichtung ausgestaltet ist, um die Bestimmung der Fahrzeuggeschwindigkeit auszuführen, wenn die Fahrzeugreferenzgeschwindigkeit mindestens 10 km/h beträgt.

5. Vorrichtung nach einem der vorstehenden Ansprüche, **dadurch gekennzeichnet, dass** die Vorrichtung ausgestaltet ist, um die Bestimmung der Fahrzeuggeschwindigkeit auszuführen, wenn die Bremse des Fahrzeugs nicht betätigt ist.

6. Vorrichtung nach einem der vorstehenden Ansprüche, **dadurch gekennzeichnet, dass** die Vorrichtung ausgestaltet ist, um die Bestimmung der Fahrzeuggeschwindigkeit auszuführen, wenn die maximale Änderung der Gierrate gegenüber dem Startwert +/- 1°/s nicht übersteigt.

7. Vorrichtung nach einem der vorstehenden Ansprüche, **dadurch gekennzeichnet, dass** das Mittel zur Bestimmung der Gierrate des Fahrzeugs ein Sensor zur Sensierung der Gierrate ist und die Mittel zur Bestimmung der Kurvenkrümmung einer vom Fahrzeug durchlaufenen Kurve ein Sensor zur Bestimmung der Raddrehzahl eines linken Rades v_li und ein Sensor zur Bestimmung der Geschwindigkeit eines rechten Rades v_re sind.

8. Vorrichtung nach einem der vorstehenden Ansprüche, **dadurch gekennzeichnet, dass** die Vorrichtung einen Sensor zur Sensierung der Querbeschleunigung des Fahrzeugs aufweist, um bei der Bestimmung der Fahrzeuggeschwindigkeit aus der Gierrate und der Kurvenkrümmung die ermittelte Fahrzeuggeschwindigkeit um einen Faktor zu korrigieren, welcher die Querbeschleunigung des Fahrzeugs berücksichtigt.

9. Vorrichtung nach einem der vorstehenden Ansprüche, **dadurch gekennzeichnet, dass** die Vorrichtung ausgestaltet ist, um die Bestimmung der Fahrzeuggeschwindigkeit bis zu einer maximalen Geschwindigkeit von 40 km/h und/oder bis zu einem maximalen Kurvenradius von 50 m auszuführen.

10. Vorrichtung nach einem der vorstehenden Ansprüche, **dadurch gekennzeichnet, dass** die Vorrichtung ausgestaltet ist, um die Bestimmung der Fahrzeuggeschwindigkeit nur durchzuführen, wenn Regelfunktionen, insbesondere ESC, ABS oder ASR, nicht aktiv sind.

11. Vorrichtung nach einem der vorstehenden Ansprüche, **dadurch gekennzeichnet, dass** die Vorrichtung ausgestaltet ist, um die Bestimmung der Fahrzeuggeschwindigkeit auszuführen, wenn mindestens eine der Bedingungen mindestens für einen vorgegebenen Zeitraum erfüllt ist, wobei die Bedingungen auf der Gierrate, der Änderung der Gierrate, dem Lenkwinkel am Rad, der Fahrzeugreferenzgeschwindigkeit, der Betätigung der Bremsen, der Querbeschleunigung der Fahrzeuges, dem Kurvenradius der durchfahrenen Kurve, und den Regelfunktionen, insbesondere ESC, ABS oder ASR basieren und wobei der Zeitraum insbesondere 400 ms beträgt.

12. Verfahren zur Bestimmung der Geschwindigkeit eines Fahrzeugs mit den Schritten: Bestimmen der Gierrate und Bestimmen der Kurvenkrümmung, **dadurch gekennzeichnet, dass** die Fahrzeuggeschwindigkeit aus der Gierrate und der Kurvenkrümmung berechnet wird, wobei die Fahrzeuggeschwindigkeit aus dem Quotienten aus der Gierrate geteilt durch die Kurvenkrümmung ermittelt wird, wobei der Quotient und die Kurvenkrümmung auf der Differenzgeschwindigkeit und dem Mittelwert von zwei Rädern an gegenüberliegenden Seiten des Fahrzeugs basiert und wobei das Verfahren eine von einem Tachographen angezeigte und auf der Drehgeschwindigkeit der Räder basierende Geschwindigkeit mit der aus der Gierrate und der Kurvenkrümmung berechneten Fahrzeuggeschwindigkeit vergleicht und entsprechende Informationen ausgibt.

**Claims**

1. Device for determining the velocity of a vehicle, having means for determining the yaw rate of the vehicle, means for determining the bend curvature of a bend traveled through by the vehicle, **characterized in that** the device has means for determining the velocity of the vehicle from the yaw rate and the bend curvature, wherein the velocity of the vehicle is determined from the quotient of the yaw rate divided by the bend curvature, wherein the quotient and the bend curvature are based on the differential speed and the mean value of two wheels on opposite sides of the vehicle and wherein the device has means for comparing the velocity indicated by a tachograph and based on the rotational speed of the wheels with the vehicle velocity acquired from the yaw rate and bend curvature.

2. Device according to Claim 1, **characterized in that** the device is configured to determine the velocity of the vehicle if the yaw rate is at least 15°/s.

3. Device according to Claim 1 or 2, **characterized in that** the device is configured to carry out the determination of the velocity of the vehicle if the steering angle at the wheel is less than 20°.

4. Device according to one of the preceding claims, **characterized in that** the device is configured to carry out the determination of the velocity of the vehicle if the reference velocity of the vehicle is at least 10 km/h.

5. Device according to one of the preceding claims, **characterized in that** the device is configured to carry out the determination of the velocity of the vehicle if the brake of the vehicle is not activated.

6. Device according to one of the preceding claims, **characterized in that** the device is configured to carry out the determination of the velocity of the vehicle if the maximum change in the yaw rate compared to the starting value does not exceed +/- 1°/s.

7. Device according to one of the preceding claims, **characterized in that** the means for the determination of the yaw rate of the vehicle is a sensor for sensing the yaw rate and the means for the determination of the bend curvature of a bend traveled through by the vehicle is a sensor for determining the wheel speed of a left-hand wheel v_li and a sensor for determining the speed of a right-hand wheel v_re.

8. Device according to one of the preceding claims, **characterized in that** the device has a sensor for sensing the lateral acceleration of the vehicle in order to correct, during the determination of the velocity of the vehicle from the yaw rate and the bend curvature, the acquired velocity of the vehicle by a factor which takes into account the lateral acceleration of the vehicle.

9. Device according to one of the preceding claims, **characterized in that** the device is configured to carry out the determination of the velocity of the vehicle up to a maximum velocity of 40 km/h and/or up to a maximum bend radius of 50 m.

10. Device according to one of the preceding claims, **characterized in that** the device is configured to carry out the determination of the velocity of the vehicle only if control functions, in particular ESC, ABS or TCS are not active.

**11.** Device according to one of the preceding claims, **characterized in that** the device is configured to carry out the determination of the velocity of the vehicle if at least one of the conditions is met at least for a predefined time period, wherein the conditions are based on the yaw rate, the change in the yaw rate, the steering angle at the wheel, the reference velocity of the vehicle, the activation of the brakes, the lateral acceleration of the vehicle, the bend radius of the bend traveled through and the control functions, in particular ESC, ABS or TCS, and wherein the time period is, in particular, 400 ms.

**12.** A method for determining the velocity of a vehicle having the steps: determination of the yaw rate and determination of the bend curvature, **characterized in that** the velocity of the vehicle is calculated from the yaw rate and the bend curvature, wherein the velocity of the vehicle is determined from the quotient of the yaw rate divided by the bend curvature, wherein the quotient and the bend curvature are based on the differential speed and the mean value of two wheels on opposite sides of the vehicle and wherein the method compares a velocity displayed and by a tachograph and based on the rotational speed of the wheels with the velocity of the vehicle calculated from the yaw rate and the bend curvature and outputs corresponding information.

**Revendications**

**1.** Dispositif pour déterminer la vitesse d'un véhicule, comprenant des moyens pour déterminer le taux de lacet du véhicule et des moyens pour déterminer la courbure de virage d'un virage parcouru par le véhicule, **caractérisé en ce que** le dispositif comporte des moyens pour déterminer la vitesse du véhicule à partir du taux de lacet et de la courbure de virage, dans lequel la vitesse du véhicule est déterminée à partir du quotient du taux de lacet divisé par la courbure de virage, dans lequel le quotient et la courbure de virage ont pour base la vitesse différentielle et la moyenne de deux roues sur des côtés opposés du véhicule et dans lequel le dispositif comporte un moyen pour comparer la vitesse indiquée par un tachygraphe et ayant pour base la vitesse de rotation des roues à la vitesse du véhicule déterminée à partir du taux de lacet et de la courbure de virage.

**2.** Dispositif selon la revendication 1, **caractérisé en ce que** le dispositif est conçu pour déterminer la vitesse du véhicule lorsque le taux de lacet est d'au moins 15°/s.

**3.** Dispositif selon la revendication 1 ou 2, **caractérisé en ce que** le dispositif est conçu pour effectuer la détermination de la vitesse du véhicule lorsque l'angle de braquage de la roue est inférieur à 20°.

**4.** Dispositif selon l'une quelconque des revendications précédentes, **caractérisé en ce que** le dispositif est conçu pour effectuer la détermination de la vitesse du véhicule lorsque la vitesse de référence du véhicule est d'au moins 10 km/h.

**5.** Dispositif selon l'une quelconque des revendications précédentes, **caractérisé en ce que** le dispositif est conçu pour effectuer la détermination de la vitesse du véhicule lorsque le frein du véhicule n'est pas actionné.

**6.** Dispositif selon l'une quelconque des revendications précédentes, **caractérisé en ce que** le dispositif est conçu pour effectuer la détermination de la vitesse du véhicule lorsque la variation maximale du taux de lacet ne dépasse pas de plus de +/-1°/s la valeur initiale.

**7.** Dispositif selon l'une quelconque des revendications précédentes, **caractérisé en ce que** le moyen destiné à déterminer le taux de lacet du véhicule est un capteur permettant de détecter le taux de lacet et **en ce que** les moyens destinés à déterminer la courbure de virage d'un virage parcouru par le véhicule sont un capteur destiné à déterminer la vitesse de rotation d'une roue gauche v_li et un capteur destiné à déterminer la vitesse d'une roue droite v_re.

**8.** Dispositif selon l'une quelconque des revendications précédentes, **caractérisé en ce que** le dispositif comporte un capteur destiné à détecter l'accélération transversale du véhicule afin de corriger la vitesse déterminée du véhicule lors de la détermination de la vitesse du véhicule à partir du taux de lacet et de la courbure de virage, d'un facteur qui tient compte de l'accélération transversale du véhicule.

**9.** Dispositif selon l'une quelconque des revendications précédentes, **caractérisé en ce que** le véhicule est conçu pour effectuer la détermination de la vitesse du véhicule jusqu'à une vitesse maximale de 40 km/h et/ou jusqu'à un rayon de courbure maximal de 50 m.

**10.** Dispositif selon l'une quelconque des revendications précédentes, **caractérisé en ce que** le dispositif est conçu pour n'effectuer la détermination de la vitesse du véhicule que lorsque des fonctions de régulation, notamment ESC, ABS ou ASR, ne sont pas actives.

**11.** Dispositif selon l'une quelconque des revendications précédentes, **caractérisé en ce que** le dispositif est conçu pour effectuer la détermination de la vitesse du véhicule lorsqu'au moins une condition est satisfaite pendant au moins un intervalle de temps prédéterminé, dans lequel les conditions ont pour base le taux de lacet, la variation du taux de lacet, l'angle de braquage de roue, la vitesse de référence du véhicule, l'actionnement des freins, l'accélération transversale du véhicule, le rayon de courbure du virage parcouru et les fonctions de régulation, notamment ESC, ABS ou ASR, et dans lequel l'intervalle de temps est notamment de 400 ms.

12. Procédé pour déterminer la vitesse d'un véhicule, comprenant les étapes consistant à :

déterminer le taux de lacet et déterminer la courbure de virage, **caractérisé en ce que** la vitesse du véhicule est calculée à partir du taux de lacet et de la courbure de virage, dans lequel la vitesse du véhicule est déterminée à partir du quotient du taux de lacet divisé par la courbure de virage, dans lequel le quotient et la courbure de virage ont pour base la vitesse différentielle et la moyenne de deux roues sur des côtés opposés du véhicule, et dans lequel le procédé compare une vitesse indiquée par un tachygraphe et ayant pour base la vitesse de rotation des roues à la vitesse du véhicule calculée à partir du taux de lacet et de la courbure de virage, et délivre des informations correspondantes.

Fig.1

Legend:
- ······· GR (aq = 1 m/s$^2$)
- —·—·— GR (aq = 2 m/s$^2$)
- ——— GR (aq_grenz)
- ▬▬▬ GR_min = 15°/s

Gierrate (GR) als Funktion von Geschwindigkeit (v) und Querbeschleunigung (aq)

Y-axis: Gierrate [°/s], values 0,0 – 10,0 – 20,0 – 30,0 – 40,0 – 50,0 – 60,0

X-axis: v [km/h], values 0 – 10 (v_min) – 20 – 30 – 40

Lernbereich

EP 2 111 557 B1

**Fig.2**

EP 2 111 557 B1

**Fig.3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6816804 B1
- US 20040243368 A1
- DE 19537791 A1
- EP 0704703 B1